# EUROPÄISCHE PATENTSCHRIFT

(11) **EP 3 224 126 B1**
(45) Veröffentlichungstag und Bekanntmachung des Hinweises auf die Patenterteilung: **14.08.2024**
(21) Anmeldenummer: 15784654.4
(22) Anmeldetag: 22.10.2015
(51) Int. Cl.: B62D 65/18, G06Q 50/04, B62D 15/02

(54) **VERFAHREN ZUM BETREIBEN EINES FAHRZEUGS UND ZUM BETREIBEN EINES FERTIGUNGSSYSTEMS**
METHOD FOR OPERATING A VEHICLE AND FOR OPERATING A PRODUCTION SYSTEM
PROCÉDÉ DE FONCTIONNEMENT D'UN VÉHICULE ET DE FONCTIONNEMENT D'UN SYSTÈME DE FABRICATION

(30) Priorität: 26.11.2014 DE 102014224082
(43) Veröffentlichungstag der Anmeldung: 04.10.2017
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2015/074455
(87) Internationale Veröffentlichungsnummer: WO 2016/083029

(56) Entgegenhaltungen:
- DE-A1- 102009 022 281
- DE-A1- 102011 108 662
- DE-A1- 102011 109 597
- DE-A1- 102012 008 777
- DE-A1- 102012 016 519
- DE-A1- 102012 222 562

## Beschreibung

Die Erfindung betrifft ein Verfahren zum Betreiben eines Fahrzeugs und ein Fertigungssystem zur Herstellung von Fahrzeugen und ein Verfahren zum Betreiben eines Fertigungssystems zur Herstellung von Fahrzeugen.

### Stand der Technik

Die Offenlegungsschrift DE 10 2011 108 662 A1 zeigt ein System zum kontrollierten Bewegen von Kraftfahrzeugen in einer Halle.

Die Offenlegungsschrift DE 10 2012 222 562 A1 zeigt ein System für bewirtschaftete Parkflächen zur Überführung eines Fahrzeugs von einer Startposition in eine Zielposition.

In Fertigungssystemen zur Fertigung von Fahrzeugen ist üblich, dass die Fahrzeuge auf einem Montageband von einer Fertigungseinrichtung zur nächsten Fertigungseinrichtung befördert werden. Am Ende der Fertigungseinrichtung fährt ein Fahrer das Fahrzeug manuell zu einem Abstellplatz.

### Offenbarung der Erfindung

Die der Erfindung zugrunde liegende Aufgabe kann darin gesehen werden, ein Verfahren zum Betreiben eines Fahrzeugs bereitzustellen, mittels welchen ein Fertigungssystem zur Herstellung von Fahrzeugen effizient betrieben werden kann.

Die der Erfindung zugrunde liegende Aufgabe kann jeweils darin gesehen werden, ein entsprechendes Fertigungssystem zur Herstellung von Fahrzeugen und ein entsprechendes Verfahren zum Betreiben eines Fertigungssystems bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren mit den Merkmalen des Anspruchs 1 bereitgestellt.

Nach noch einem Aspekt wird ein Verfahren mit den Merkmalen des Anspruchs 7 bereitgestellt.

Nach noch einem Aspekt wird ein Fertigungssystem mit den Merkmalen des Anspruchs 8 bereitgestellt.

Die Erfindung umfasst also insbesondere den Gedanken, ein Fahrzeug autonom oder ferngesteuert innerhalb eines Fertigungssystems zu fahren. Das heißt also, dass das Fahrzeug nicht mehr manuell mittels eines Fahrers gefahren werden muss. Somit werden wertvolle Ressourcen für das Fertigungssystem frei. Ferner kann durch das autonome oder ferngesteuerte Fahren eine Zeitersparnis bewirkt werden. Denn ein Fahrer muss nicht mehr in das Auto einsteigen und nach einem Abstellen des Fahrzeugs wieder aussteigen. Dieses Ein- und Aussteigen kostet dem Fahrer Zeit. Ferner ist es so ermöglicht, die Funktionsfähigkeit des Fahrzeugs hinsichtlich einer autonomen oder ferngesteuerten Fahrt noch innerhalb des Fertigungssystems zu prüfen, um eventuelle Fehlfunktionen noch innerhalb des Fertigungssystems beheben zu können. Dies ist mit deutlich weniger Aufwand verbunden im Vergleich zu der Situation, in welcher eine Fehlfunktion erst außerhalb des Fertigungssystems, beispielsweise beim Endkunden, festgestellt wird.

Auch kann sich ein Fahrzeug autonom oder ferngesteuert flexibler innerhalb des Fertigungssystems bewegen. Denn für eine Bewegung des Fahrzeugs innerhalb des Fertigungssystems muss nun nicht mehr ein Förder- oder Montageband verwendet werden, welches hinsichtlich seiner Geometrie nachträglich nicht mehr geändert werden kann. Somit kann allgemein das Fertigungssystem flexibel aufgebaut werden. Insbesondere können Förder- oder Montagebänder eingespart werden.

Es wird also erfindungsgemäß ein Konzept bereitgestellt, mittels welchen ein Fertigungssystem effizient und kostengünstig betrieben werden kann.

Autonom im Sinne der vorliegenden Erfindung bedeutet, dass das Fahrzeug selbstständig, also ohne einen Eingriff eines Fahrers, innerhalb des Fertigungssystems, einschließlich einem Parkplatz, navigiert oder fährt oder ferngesteuert geführt wird. Das Fahrzeug fährt also selbstständig auf dem Parkplatz, ohne dass ein Fahrer hierfür das Fahrzeug steuern müsste. Ein Führen umfasst insbesondere eine Quer- und/oder eine Längsführung des Fahrzeugs. Ein solch autonomes fahrendes Fahrzeug, das zusätzlich noch automatisch ein- und ausparken kann, ist ein AVP-Fahrzeug. AVP steht für "automatic valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Eine Parkposition im Sinne der vorliegenden Erfindung ist eine Position, an welcher das Fahrzeug autonom parken soll.

In einer weiteren Ausführungsform ist vorgesehen, dass das Fahrzeug autonom in die Parkposition einparkt oder ferngesteuert einparkt.

In einer anderen Ausführungsform ist vorgesehen, dass das Fahrzeug autonom aus der Parkposition ausparkt oder ferngesteuert ausparkt.

Erfindungsgemäß ist vorgesehen, dass das Fertigungssystem eine Fertigungsstraße für eine Fahrzeugfertigung aufweist.

Nach einer Ausführungsform umfasst die Fertigungsstraße eine räumliche Abfolge von Fertigungseinrichtungen, auf denen in zeitlicher Abfolge Fertigungsschritte an dem zu fertigenden Fahrzeug durchgeführt werden.

Erfindungsgemäß umfasst das Fertigungssystem einen Parkplatz.

Erfindungsgemäß ist vorgesehen, dass das Fertigungssystem eine Fertigungsstraße für eine Fahrzeugfertigung und einen Parkplatz aufweist, wobei das Fahrzeug am Ende der Fertigungsstraße zum Parkplatz fährt und sich auf dem Parkplatz abstellt. Dadurch wird insbesondere der technische Vorteil bewirkt, dass nach Fertigstellung des Fahrzeugs sofort und unmittelbar überprüft werden kann, ob das Fahrzeug eine AVP (Automatic Valet Parking)-Funktion korrekt implementiert hat. Das heißt also, dass überprüft wird, ob die AVP-Funktionalität des Fahrzeugs betriebsbereit ist.

Erfindungsgemäß muss durch das autonome oder ferngesteuerte Fahren vom Ende der Fertigungsstraße zum Parkplatz kein menschlicher Fahrer mehr für diese Aufgabe abgestellt werden. Dies kann Ressourcen und Zeit einsparen.

Gemäß einer weiteren Ausführungsform ist vorgesehen, dass das Fertigungssystem eine Fertigungsstraße für eine Fahrzeugfertigung aufweist, wobei das Fahrzeug von einer Fertigungseinrichtung zu einer weiteren Fertigungseinrichtung der Fertigungsstraße fährt. Dadurch wird insbesondere der technische Vorteil bewirkt, dass für die Bewegung des Fahrzeugs von einer zur nächsten Fertigungseinrichtung kein Montage- oder Förderband mehr verwendet werden muss. Auch dadurch können in vorteilhafter Weise Kosten eingespart werden. Insbesondere kann dadurch ein Wartungsaufwand für Montage oder Förderbänder eingespart werden. Insbesondere kann auch hier eine AVP-Funktionalität des Fahrzeugs getestet werden. Insbesondere kann hier getestet werden, ob das Fahrzeug korrekt autonom oder korrekt ferngesteuert fährt.

In einer Ausführungsform ist vorgesehen, dass das Fahrzeug während seiner Fahrt zu einer oder mehreren Testeinrichtungen zum Durchführen eines oder mehrerer Fahrzeugtests fährt. Dadurch wird insbesondere der technische Vorteil bewirkt, dass ein effizientes Testen des Fahrzeugs durchgeführt werden kann, insofern auch hier kein menschlicher Fahrer für eine Fahrt zu den Testeinrichtungen abgestellt werden muss. Das Fahrzeug fährt selbständig, also autonom, oder ferngesteuert zu der einen oder der mehreren Testeinrichtungen.

Nach einer Ausführungsform sind die eine oder die mehreren Testeinrichtungen ausgebildet, zumindest einen oder mehreren der folgenden Tests durchzuführen: Beulentest, Lacktest, Beleuchtungstest an einer Fahrzeugbeleuchtung.

Gemäß einer weiteren Ausführungsform ist vorgesehen, dass die Fahrt des Fahrzeugs mittels eines fahrzeugexternen Überwachungssystems zumindest teilweise, insbesondere vollständig, überwacht und/oder dokumentiert wird. Dadurch wird insbesondere der technische Vorteil bewirkt, dass auch nach einer Fahrt die Fahrt nachvollzogen werden kann. Insbesondere können beispielsweise Fehler oder Fehlfunktionen, die während der Fahrt aufgetreten sind, nachvollzogen werden. Durch das Überwachen wird insbesondere der technische Vorteil bewirkt, dass im Fall eines Fehlers oder einer Fehlfunktion des Fahrzeugs sofort und unmittelbar eingegriffen werden kann, bevor es zu einem Schaden kommen könnte. Das Dokumentieren der Fahrt umfasst insbesondere ein visuelles Aufzeichnen, allgemein ein Aufzeichnen, der Fahrt.

Nach einer Ausführungsform ist vorgesehen, dass fahrzeuginterne Fahrzeugdaten, die während der Fahrt generiert werden, überwacht und/oder dokumentiert werden. Hier werden insbesondere die gleichen technischen Vorteile bewirkt, wie sie im Zusammenhang mit der Überwachung oder der Dokumentation der Fahrt des Fahrzeugs erläutert wurden.

Nach einer Ausführungsform werden die fahrzeuginternen Fahrzeugdaten im Fahrzeug selbst gespeichert, zum Beispiel in einen fahrzeuginternen Speicher.

Nach einer Ausführungsform werden die gespeicherten fahrzeuginternen Fahrzeugdaten während und/oder nach der Fahrt aus dem fahrzeuginternen Speicher ausgelesen.

Zusätzlich oder alternativ dazu ist nach einer weiteren Ausführungsform vorgesehen, dass die fahrzeuginternen Fahrzeugdaten, die während der Fahrt generiert werden, über ein Kommunikationsnetzwerk an einen Server gesendet oder übermittelt werden. Ein solcher Server kann beispielsweise in vorteilhafter Weise die fahrzeuginternen Fahrzeugdaten auswerten. Hierfür umfasst der Server beispielsweise einen Prozessor, der ausgebildet ist, die fahrzeuginternen Fahrzeugdaten auszuwerten. Der Server ist nach einer Ausführungsform vom Fertigungssystem umfasst. Das heißt, dass die fahrzeuginternen Daten über das Kommunikationsnetzwerk an das Fertigungssystem gesendet werden.

Nach einer Ausführungsform umfasst das Kommunikationsnetzwerk eine WLAN- und/oder Mobilfunknetzwerk.

Nach einer Ausführungsform ist respektive wird eine Kommunikation über das Kommunikationsnetzwerk verschlüsselt.

Das Überwachungssystem umfasst nach einer Ausführungsform eine oder mehrere Videokameras und/oder einen oder mehrere Radarsensoren und/oder einen oder mehrere Ultraschallsensoren und/oder einen oder mehrere Lidarsensoren und/oder einen oder mehrere Lasersensoren und/oder eine oder mehrere Lichtschranken und/oder einen oder mehrere Türöffnungssensoren.

Nach einer Ausführungsform umfasst das Fahrzeug eine Umfeldsensorik für eine sensorische Erfassung eines Fahrzeugumfelds. Die Umfeldsensorik umfasst vorzugsweise einen oder mehrere der folgenden Umfeldsensoren: Radarsensor, Lidarsensor, Ultraschallsensor, Videosensor und Lasersensor.

Nach einer Ausführungsform umfasst das Fahrzeug eine Kommunikationsschnittstelle, die ausgebildet ist, mit einem oder mehreren Teilnehmern eines Kommunikationsnetzwerks zu kommunizieren. Zum Beispiel ist die Kommunikationsschnittstelle ausgebildet, Daten, insbesondere fahrzeuginterne Fahrzeugdaten, über das Kommunikationsnetzwerk an den oder die Teilnehmer zu senden. Insbesondere ist die Kommunikationsschnittstelle ausgebildet, Daten, zum Beispiel Steuerungsbefehle, über das Kommunikationsnetzwerk zu empfangen. Das Fertigungssystem ist also nach einer Ausführungsform eingerichtet ist, das Fahrzeug fernzusteuern. Dies mittels der Steuerungsbefehle.

Ein Teilnehmer des Kommunikationsnetzwerks ist zum Beispiel das Fertigungssystem zur Herstellung von Fahrzeugen.

Das Fertigungssystem umfasst nach einer weiteren Ausführungsform eine Kommunikationsschnittstelle, die ausgebildet ist, mit einem oder mehreren Teilnehmern des Kommunikationsnetzwerks zu kommunizieren. Hier ist dann ein Teilnehmer des Kommunikationsnetzwerks zum Beispiel das Fahrzeug.

Erfindungsgemäß ist vorgesehen, dass das Fahrzeug für die autonome Fahrt relevante Daten empfängt, basierend auf welchen das Fahrzeug autonom innerhalb des Fertigungssystems fährt. Dadurch wird insbesondere der technische Vorteil bewirkt, dass eine effiziente autonome Fahrt des Fahrzeugs auf oder innerhalb des Fertigungssystems ermöglicht ist. Denn hierfür hat das Fahrzeug relevante Daten empfangen. Diese relevanten Daten werden beispielsweise mittels des Fertigungssystems an das Fahrzeug gesendet.

Für die autonome Fahrt relevante Daten umfassen beispielsweise folgende Daten, einzeln oder in Kombination: Kartendaten einer digitalen Karte, Positionsdaten von einem oder mehreren stationären Objekten, die sich innerhalb des Fertigungssystems befinden, Positionsdaten von einem oder mehreren mobilen Objekten, die sich innerhalb des Fertigungssystems befinden, Prädiktionsdaten hinsichtlich einer zukünftigen Bewegung von einem oder mehreren mobilen Objekten, die sich innerhalb des Fertigungssystems befinden, Zielpositionsdaten für ein oder mehrere Ziele, die das Fahrzeug autonom anfahren soll. Ein solches Ziel ist beispielsweise eine Position oder ein Ort einer Fertigungseinrichtung, einer Testeinrichtung oder eines Ende der Fertigungsstraße oder eines Parkplatzes oder einer Parkposition auf dem Parkplatz.

Die für die autonome Fahrt relevanten Daten werden vorzugsweise über das Kommunikationsnetzwerk vom Fahrzeug empfangen respektive an das Fahrzeug gesendet, beispielsweise mittels des Fertigungssystems. Das heißt, dass das Fertigungssystem diese Daten an das Fahrzeug sendet.

In einer anderen Ausführungsform ist vorgesehen, dass für das ferngesteuerte Fahren ein oder mehrere Fernsteuerungsbefehle oder Steuerungsbefehle von dem Fahrzeug empfangen werden, wobei das Fahrzeug ansprechend auf den oder die Fernsteuerungsbefehle (auch Steuerungsbefehle genannt) entsprechend ferngesteuert fährt. Das Empfangen kann auch hier beispielsweise über das Kommunikationsnetzwerk durchgeführt werden. Das heißt also, dass das Fahrzeug über das Kommunikationsnetzwerk einen oder mehreren Fernsteuerungsbefehle empfängt. Diese werden beispielsweise vom Fertigungssystem an das Fahrzeug über das Kommunikationsnetzwerk gesendet. Das Fahrzeug wird also basierend auf den Fernsteuerungsbefehlen gefahren. Diese Ausführungsform weist insbesondere den Vorteil auf, dass das Fahrzeug selbst kein Wissen über das Fertigungssystem, insbesondere über eine Topografie des Fertigungssystems, aufweisen muss. Beispielsweise muss das Fahrzeug nicht wissen, wo sich mobile oder stationäre Objekte innerhalb des Fertigungssystems befinden. Das Fahrzeug muss für sich selbst auch keine abzufahrende Solltrajektorie ermitteln. Sämtliches Wissen kann fahrzeugextern bleiben, beispielsweise weist das Fertigungssystem dieses Wissen auf. Dem Fahrzeug wird lediglich vorgegeben, wohin und wie es fahren soll, also beispielsweise mit welcher Geschwindigkeit. Insbesondere muss das Fahrzeug keine digitale Karte des Fertigungssystems aufweisen. Dadurch muss also auch keine digitale Karte für das Fahrzeug erstellt werden, was in der Regel aufwendig ist, sodass dadurch Zeit und Kosten und Ressourcen eingespart werden können.

In einer weiteren Ausführungsform ist vorgesehen, dass sich das Fahrzeug während seiner Fahrt an einer fahrzeugexternen Navigationsinfrastruktur orientiert.

Eine Navigationsinfrastruktur umfasst beispielsweise einen oder mehrere Signalgeber, beispielsweise Lichtsignalgeber, zum Beispiel visuelle Landmarken. Dies analog zu einem Leuchtturm oder einem Leuchtfeuer, an welchem respektive welchen sich das Fahrzeug orientiert bei seiner Bewegung innerhalb des Fertigungssystems. Eine Navigationsinfrastruktur umfasst beispielsweise einen oder mehrere Radiosender, zum Beispiel WLAN-Sender. Dies auch analog zu einem Leuchtturm. Das Fahrzeug folgt also insbesondere den Lichtsignalen und/oder den Radiosignalen, beispielsweise den WLAN-Signalen. Dieses Folgen bewirkt insbesondere, dass das Fahrzeug zu einer oder mehrerer Zielpositionen gelangen kann. Das heißt also, dass das Fahrzeug zu der einen oder der mehreren Zielpositionen gelangen kann, respektive gelangt, wenn es den Signalen folgt.

Dadurch ist in vorteilhafter Weise eine verbesserte Navigation des Fahrzeugs innerhalb des Fertigungssystems ermöglicht.

Nach einer Ausführungsform wird eine Route des Fahrzeugs für Personen oder weitere Fahrzeuge gesperrt. Das heißt also, dass die Route des Fahrzeugs, zumindest Teilstücke der Route, abgesperrt werden. Ein Absperren kann beispielsweise mittels einer oder mehrerer Schranken durchgeführt werden. Insbesondere können Signalanlagen, insbesondere Lichtsignalanlagen, entsprechend gesteuert werden, dass diese Rot- respektive Grünsignale aussenden, um die Route, insbesondere Teilstücke der Route, zu sperren oder freizugeben. Das heißt also, dass vorzugsweise ein Weg von einem Bandende, also einem Ende einer Fertigungsstraße, zum Parkplatz extra gesichert wird.

Dieser Weg ist nach einer Ausführungsform möglichst menschenleer.

Ausführungsformen hinsichtlich der Verfahren ergeben sich analog aus den entsprechenden Ausführungsformen hinsichtlich des Fertigungssystems und umgekehrt. Das heißt also, dass sich Vorrichtungs- oder Systemmerkmale oder Fahrzeugmerkmale aus den entsprechenden Verfahrensmerkmalen ergeben und umgekehrt.

Die Erfindung wird im Folgenden anhand von bevorzugten Ausführungsbeispielen näher erläutert. Hierbei zeigen:
- Fig. 1: ein Ablaufdiagramm eines Verfahrens zum Betreiben eines Fahrzeugs,
- Fig. 2: ein Ablaufdiagramm eines weiteren Verfahrens zum Betreiben eines Fahrzeugs,
- Fig. 3: ein Ablaufdiagramm eines anderen Verfahrens zum Betreiben eines Fahrzeugs,
- Fig. 4: ein Fahrzeug und
- Fig. 5: ein Fertigungssystem.

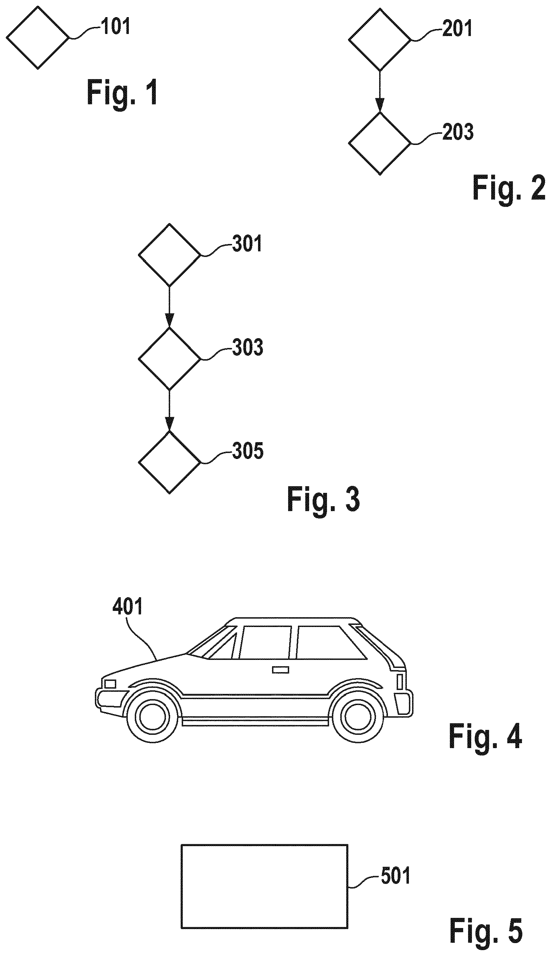

Fig. 1 zeigt ein Ablaufdiagramm eines Verfahrens zum Betreiben eines Fahrzeugs.

Gemäß einem Schritt 101 ist vorgesehen, dass das Fahrzeug autonom oder ferngesteuert innerhalb eines Fertigungssystems zur Herstellung von Fahrzeugen fährt.

Fig. 2 zeigt ein Ablaufdiagramm eines weiteren Verfahrens zum Betreiben eines Fahrzeugs.

In einem Schritt 201 ist vorgesehen, dass das Fahrzeug von einem Ende einer Fertigungsstraße des Fertigungssystems zu einem Parkplatz des Fertigungssystems fährt und sich dort gemäß einem Schritt 203 abstellt, beispielsweise in eine Parkposition.

Das heißt also, dass das Fahrzeug nach seiner Fertigstellung autonom oder ferngesteuert zu einer Parkposition auf dem Parkplatz fährt.

Dadurch kann in vorteilhafter Weise eine autonome Fahrfunktionalität oder Fernsteuerungsfunktionalität des Fahrzeugs getestet werden. Erfindungsgemäß kann dadurch eine Parkfunktionalität des Fahrzeugs getestet werden. Das Fahrzeug ist ein AVP-Fahrzeug.

Fig. 3 zeigt ein Ablaufdiagramm eines anderen Verfahrens zum Betreiben eines Fahrzeugs.

Gemäß einem Schritt 301 ist vorgesehen, dass das Fahrzeug während seiner Fahrt innerhalb des Fertigungssystems zu einer ersten Testeinrichtung fährt. Dort können dann ein oder mehrere Tests durchgeführt werden. Es ist dann in einem Schritt 303 vorgesehen, dass das Fahrzeug zu einer weiteren Testeinrichtung fährt, an welcher ebenfalls ein oder mehrere Tests am Fahrzeug durchgeführt werden können. Es ist dann gemäß einem Schritt 305 vorgesehen, dass das Fahrzeug zu einer Parkposition auf einem Parkplatz des Fertigungssystems fährt.

In einer nicht gezeigten Ausführungsform ist vorgesehen, dass das Fahrzeug mehr als zwei Testeinrichtungen anfährt.

Fig. 4 zeigt ein Fahrzeug 401, das eingerichtet ist, das Verfahren zum Betreiben eines Fahrzeugs durchzuführen.

Fig. 5 zeigt ein Fertigungssystem 501 zur Herstellung von Fahrzeugen, beispielsweise von einem Fahrzeug gemäß dem Fahrzeug 401 der Fig. 4, wobei das Fertigungssystem 501 eingerichtet ist, ein Verfahren zum Betreiben eines Fertigungssystems zur Herstellung von Fahrzeugen durchzuführen, wobei ein Fahrzeug im Rahmen seiner Fertigung mittels des Fertigungssystems das Verfahren zum Betreiben eines Fahrzeugs durchführt.

Das heißt also insbesondere, dass das Fahrzeug im Rahmen seiner Fertigung oder seiner Herstellung autonom innerhalb des Parkplatzes fährt oder ferngesteuert innerhalb des Fertigungssystems fährt.

Zusammenfassend stellt die Erfindung insbesondere und unter anderem ein technisches Konzept bereit, in welchem eine Valet Parking-Funktionalität, also eine automatische Parkfunktionalität, in der Produktion bei einem Hersteller (auch OEM genannt, wobei OEM für Original Equipment Manufacturer, also Erstausrüster, steht) zur Unterstützung des Produktions- oder Herstellungsprozesses oder Fertigungsprozesses eingesetzt werden kann. Dadurch ist es zusätzlich zur Fertigstellung möglich, diese Valet Parking-Funktionalität parallel zu testen und/oder zu validieren.

Der erfindungsgemäße Kerngedanke ist insbesondere, dass das AVP-Fahrzeug am Ende des Produktionsprozesses vom Band, also insbesondere am Ende der Fertigungsstraße, zum OEM-Parkplatz der produzierten Fahrzeuge, also einem Parkplatz außerhalb der Produktion, selbständig oder autonom oder ferngesteuert fährt.

Dadurch wird in vorteilhafter Weise das Fahrzeug respektive die Valet Parking-Funktion oder -Funktionalität gleichzeitig bezüglich der Funktion getestet und/oder validiert. Das heißt, dass die Produktion respektive das Werk, also allgemein das Fertigungssystem für die AVP-Funktionalität zu einem Parkplatz, insbesondere einem Parkhaus, wird. Der Hersteller oder Fertiger oder OEM wird für diesen Anwendungsfall beispielsweise zu einem Parkplatzmanagementsystem. Das heißt also, dass das Fertigungssystem hinsichtlich der AVP-Funktionalität die Funktionalität eines Parkplatzmanagementsystems oder Parkplatzverwaltungssystems übernimmt. Ein Unterschied zu einem üblichen Valet Parking ist insbesondere darin zu sehen, dass das Fahrzeug nach dem Abstellen auf dem Parkplatz, also insbesondere nach dem Abstellen in der Parkposition, dort verbleibt und nicht wieder zurück zu einer Abholposition fährt, an welcher im Rahmen des Valet Parkings der Fahrer sein Fahrzeug abholen kann.

Ein weiterer Unterschied ist insbesondere darin zu sehen, dass erfindungsgemäß ein paralleles Testen und/oder Validieren möglich ist respektive durchgeführt wird.

Vorzugsweise wird die Fahrt dabei durch ein Überwachungssystem überwacht und dokumentiert.

Vorzugsweise werden die fahrzeuginternen Daten mit überwacht und dokumentiert.

In einer weiteren Ausführungsform ist vorgesehen, dass auf dem Weg vorhandene, also vom Ende der Fertigungsstraße zum Parkplatz, eine oder mehrere Test- und/oder Validierungsaktionen aus- oder durchgeführt werden.

Nach einer Ausführungsform ist vorgesehen, dass auf dem Weg vom Bandende, also vom Ende der Fertigungsstraße zum Parkplatz, bestimmte Stopps für zusätzliche Aktionen ausgeführt werden, das heißt, dass das Fahrzeug ein oder mehrere Testeinrichtungen anfährt. Zum Beispiel können die Tests zufällig ausgewählt sein. Ein Test kann beispielsweise ein Beulentest oder ein Lacktest sein. Insbesondere werden mehrere Tests durchgeführt.

Sofern es möglich ist, dass die AVP-Funktion oder Funktionalität schon vor einem letzten Produktions- oder Fertigungsschritt einsatzbereit ist, ist es nach einer Ausführungsform vorgesehen, dass die AVP-Funktionalität schon während der Produktion oder Fertigung eingesetzt wird, zum Beispiel damit das Fahrzeug selbständig, also autonom oder ferngesteuert, von einem Produktions- oder Fertigungsschritt A zu einem weiteren Fertigungsschritt B fährt.

## Patentansprüche

1. Verfahren zum Betreiben eines Fahrzeugs (401), wobei das Fahrzeug (401) im Rahmen seiner Fertigung autonom oder ferngesteuert innerhalb eines Fertigungssystems (501) zur Herstellung von Fahrzeugen fährt (101), wobei das Fertigungssystem (501) eine Fertigungsstraße für eine Fahrzeugfertigung und einen Parkplatz aufweist, wobei das Fahrzeug (401) am Ende der Fertigungsstraße zum Parkplatz fährt (201) und sich auf dem Parkplatz abstellt (203), wobei das Fahrzeug (401) ein AVP-Fahrzeug, also ein autonomes fahrendes Fahrzeug, das zusätzlich noch automatisch ein- und ausparken kann ist, wobei überprüft wird, ob die AVP-Funktionalität des Fahrzeugs (401) betriebsbereit ist und wobei das Fahrzeug (401) für die autonome Fahrt relevante Daten empfängt, basierend auf welchen das Fahrzeug (401) autonom innerhalb des Fertigungssystems (501) fährt oder wobei für das ferngesteuerte Fahren ein oder mehrere Fernsteuerungsbefehle von dem Fahrzeug (401) empfangen werden, wobei das Fahrzeug (401) ansprechend auf den oder die Fernsteuerungsbefehle entsprechend ferngesteuert fährt, und wobei die für die autonome Fahrt relevanten Daten oder die Fernsteuerungsbefehle von dem Fertigungssystem (501) an das Fahrzeug gesendet werden, so dass das Fertigungssystem (501) hinsichtlich der AVP-Funktionalität die Funktionalität eines Parkplatzmanagementsystems oder Parkplatzverwaltungssystems übernimmt.

2. Verfahren nach Anspruch 1, wobei das Fertigungssystem (501) eine Fertigungsstraße für eine Fahrzeugfertigung aufweist, wobei das Fahrzeug (401) von einer Fertigungseinrichtung zu einer weiteren Fertigungseinrichtung der Fertigungsstraße fährt.

3. Verfahren nach einem der vorherigen Ansprüche, wobei das Fahrzeug (401) während seiner Fahrt zu einer oder mehreren Testeinrichtungen zum Durchführen eines oder mehrerer Fahrzeugtests fährt (301, 303).

4. Verfahren nach einem der vorherigen Ansprüche, wobei die Fahrt des Fahrzeugs (401) mittels eines fahrzeugexternen Überwachungssystems zumindest teilweise, insbesondere vollständig, überwacht und/oder dokumentiert wird.

5. Verfahren nach einem der vorherigen Ansprüche, wobei fahrzeuginterne Fahrzeugdaten, die während der Fahrt generiert werden, überwacht und/oder dokumentiert werden.

6. Verfahren nach einem der vorherigen Ansprüche, wobei sich das Fahrzeug (401) während seiner Fahrt an einer fahrzeugexternen Navigationsinfrastruktur orientiert.

7. Verfahren zum Betreiben eines Fertigungssystems (501) zur Herstellung von Fahrzeugen, wobei ein Fahrzeug (401) im Rahmen seiner Fertigung mittels des Fertigungssystems (501) das Verfahren nach einem der Ansprüche 1 bis 6 durchführt.

8. Fertigungssystem (501) zur Herstellung von Fahrzeugen, das eingerichtet ist, das Verfahren nach Anspruch 7 durchzuführen.

## Claims

1. Method for operating a vehicle (401), wherein the vehicle (401) drives (101) autonomously or in a remote-controlled manner during its production within a production system (501) for manufacturing vehicles, wherein the production system (501) has a production line for producing vehicles and a parking area, wherein the vehicle (401) drives (201) to the parking area at the end of the production line and parks (203) in the parking area, wherein the vehicle (401) is an AVP vehicle, that is to say an autonomous driving vehicle, which can additionally also drive into and out of a parking space automatically, wherein it is checked whether the AVP functionality of the vehicle (401) is operational, and wherein the vehicle (401) receives data which are relevant to the autonomous journey and on the basis of which the vehicle (401) drives autonomously within the production system (501), or wherein one or more remote control commands are received by the vehicle (401) for the remote-controlled driving, wherein the vehicle (401) accordingly drives in a remote-controlled manner in response to the remote control command(s), and wherein the data relevant to the autonomous journey or the remote control commands are transmitted by the production system (501) to the vehicle, with the result that the production system (501) undertakes the functionality of a parking area management system or a parking area administration system with regard to the AVP functionality.

2. Method according to Claim 1, wherein the production system (501) has a production line for producing vehicles, wherein the vehicle (401) drives from a production device to a further production device of the production line.

3. Method according to one of the preceding claims, wherein the vehicle (401) drives (301, 303), during its journey, to one or more test devices for carrying out one or more vehicle tests.

4. Method according to one of the preceding claims, wherein the journey of the vehicle (401) is monitored and/or documented at least partially, in particular completely, by means of a monitoring system outside the vehicle.

5. Method according to one of the preceding claims, wherein vehicle-internal vehicle data which are generated during the journey are monitored and/or documented.

6. Method according to one of the preceding claims, wherein the vehicle (401) is oriented during its journey by a navigation infrastructure outside the vehicle.

7. Method for operating a production system (501) for manufacturing vehicles, wherein a vehicle (401) carries out the method according to one of Claims 1 to 6 during its production by means of the production system (501).

8. Production system (501) for manufacturing vehicles, which is configured to carry out the method according to Claim 7.

## Revendications

1. Procédé pour faire fonctionner un véhicule (401), le véhicule (401) se déplaçant de manière autonome ou commandée à distance (101) dans le cadre de sa fabrication à l'intérieur d'un système de fabrication (501) destiné à la fabrication de véhicules, le système de fabrication (501) possédant une chaîne de fabrication pour une fabrication de véhicules et une aire de stationnement, le véhicule (401), à la fin de la chaîne de fabrication, se déplaçant (201) vers l'aire de stationnement et s'arrêtant (203) sur l'aire de stationnement, le véhicule (401) étant un véhicule AVP, c'est-à-dire un véhicule à conduite autonome, qui peut en plus également se garerentrer en stationnement et sortir de stationnement automatiquement, un contrôle étant effectué afin de vérifier si la fonctionnalité AVP du véhicule (401) est opérationnelle et le véhicule (401) recevant des données pertinentes pour le déplacement autonome, sur la base desquelles le véhicule (401) se déplace de manière autonome à l'intérieur du système de fabrication (501) ou, pour la conduite commandée à distance, une ou plusieurs instructions de commande à distance étant reçues par le véhicule (401), le véhicule (401) se déplaçant de manière commandée à distance en conséquence en réponse à la ou aux instructions de commande à distance, et les données pertinentes pour le déplacement autonome ou les instructions de commande à distance étant envoyées par le système de fabrication (501) au véhicule, de sorte que le système de fabrication (501), du point de vue de la fonctionnalité AVP, prend en charge la fonctionnalité d'un système d'administration d'aire de stationnement ou d'un système de gestion d'aire de stationnement.

2. Procédé selon la revendication 1, le système de fabrication (501) comprenant une chaîne de fabrication pour une fabrication de véhicules, le véhicule (401) se déplaçant d'un dispositif de fabrication à un autre dispositif de fabrication de la chaîne de fabrication.

3. Procédé selon l'une des revendications précédentes, le véhicule (401), pendant son déplacement, se déplaçant (301, 303)vers un ou plusieurs dispositifs de test en vue d'effectuer un ou plusieurs tests de véhicule .

4. Procédé selon l'une des revendications précédentes, le déplacement du véhicule (401) étant surveillé et/ou documenté au moins partiellement, notamment entièrement, au moyen d'un système de surveillance externe au véhicule.

5. Procédé selon l'une des revendications précédentes, des données internes au véhicule, qui sont générées pendant le déplacement, étant surveillées et/ou documentées.

6. Procédé selon l'une des revendications précédentes, le véhicule (401), pendant son déplacement, s'orientant sur une infrastructure de navigation externe au véhicule.

7. Procédé d'exploitation d'un système de fabrication (501) pour la fabrication de véhicules, un véhicule (401) mettant en oeuvre le procédé selon l'une des revendications 1 à 6 dans le cadre de sa fabrication au moyen du système de fabrication (501).

8. Système de fabrication (501) destiné à la production de véhicules, lequel est conçu pour mettre en oeuvre le procédé selon la revendication 7.
